(19) Europäisches Patentamt
European Patent Office
Office européen des brevets

(11) **EP 2 807 739 B1**

(12) **EUROPEAN PATENT SPECIFICATION**

(45) Date of publication and mention
of the grant of the patent:
**29.08.2018 Bulletin 2018/35**

(51) Int Cl.:
**H02M 7/487** *(2007.01)*     **H02P 27/12** *(2006.01)*
**H02P 27/14** *(2006.01)*     H02P 1/00 *(2006.01)*
H02P 23/12 *(2006.01)*     H02P 23/30 *(2016.01)*

(21) Application number: **13700713.4**

(22) Date of filing: **16.01.2013**

(86) International application number:
**PCT/EP2013/050733**

(87) International publication number:
**WO 2013/110532 (01.08.2013 Gazette 2013/31)**

(54) **MULTICORE IMPLEMENTED WEIGHT-FUNCTION BASED PREDICTIVE CONTROL OF AN ELECTRIC CONVERTER**

MULTICORE FÄHIGE KOSTENFUNKTIONSBASIERTE PRÄDIKTIVE STEUERUNGSMETHODE EINES UMRICHTERS

CONTRÔLE PRÉDICTIVE D'UN CONVERTISSEUR ÉLECTRIQUE AVEC FONCTION DE COÛT POUR LES PROCESSEUR MULTICOEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.01.2012 EP 12152208**

(43) Date of publication of application:
**03.12.2014 Bulletin 2014/49**

(73) Proprietor: **ABB Research Ltd.**
**8050 Zürich (CH)**

(72) Inventors:
• **PEYRL, Helfried**
**8003 Zürich (CH)**
• **RICHTER, Stefan**
**5303 Würenlingen (CH)**

(74) Representative: **ABB Patent Attorneys**
**C/o ABB Schweiz AG**
**Intellectual Property (CH-LC/IP)**
**Brown Boveri Strasse 6**
**5400 Baden (CH)**

(56) References cited:
**EP-A1- 2 348 631**

• **TOBIAS GEYER: "Generalized Model Predictive Direct Torque Control: Long prediction horizons and minimization of switching losses", DECISION AND CONTROL, 2009 HELD JOINTLY WITH THE 2009 28TH CHINESE CONTROL CONFERENCE. CDC/CCC 2009. PROCEEDINGS OF THE 48TH IEEE CONFERENCE ON, IEEE, PISCATAWAY, NJ, USA, 15 December 2009 (2009-12-15), pages 6799-6804, XP031619580, ISBN: 978-1-4244-3871-6**
• **NEUMERKEL D ET AL: "Real-time application of neural model predictive control for an induction servo drive", CONTROL APPLICATIONS, 1994., PROCEEDINGS OF THE THIRD IEEE CONFERENCE ON GLASGOW, UK 24-26 AUG. 1994, NEW YORK, NY, USA,IEEE, 24 August 1994 (1994-08-24), pages 433-438, XP010130999, DOI: 10.1109/CCA.1994.381407 ISBN: 978-0-7803-1872-4**
• **LUK P C K: "On applying parallel processing to a versatile induction motor drive system", INDUSTRIAL ELECTRONICS, CONTROL, AND INSTRUMENTATION, 1993. PROCEEDING S OF THE IECON '93., INTERNATIONAL CONFERENCE ON MAUI, HI, USA 15-19 NOV. 1993, NEW YORK, NY, USA,IEEE, 15 November 1993 (1993-11-15), pages 907-912, XP010109165, DOI: 10.1109/IECON.1993.339154 ISBN: 978-0-7803-0891-6**

• AKPAN V A ET AL: "Adaptive predictive control using recurrent neural network identification", CONTROL AND AUTOMATION, 2009. MED '09. 17TH MEDITERRANEAN CONFERENCE ON, IEEE, PISCATAWAY, NJ, USA, 24 June 2009 (2009-06-24), pages 61-66, XP031490070, ISBN: 978-1-4244-4684-1

**Description**

FIELD OF THE INVENTION

The invention relates to the field of control of electrical converters. In particular, the invention relates to a method, a computer program and a computer-readable medium for controlling an electrical converter as well as to a controller of an electrical converter and a converter system.

BACKGROUND OF THE INVENTION

Direct Torque Control (DTC) is a method for controlling torque and flux of an electrical motor in medium voltage drive applications. However, one of the drawbacks of DTC may be the fact that the average switching frequency of a converter cannot be directly controlled. Since the switching frequency is usually proportionally related to the switching losses of the converter, a major part of the overall losses of the drive, any reduction of the switching frequency may have a significant impact on the operational cost of the drive and increase the overall system robustness and reliability.
Such a reduction has been shown to be possible through the Model Predictive Direct Torque Control (MPDTC) method, which comprises two model-based optimal control algorithms. The computational complexity of MPDTC required an FPGA-based implementation and substantial engineering work to meet the required sampling times.
The MPDTC algorithm has been extended to "Generalized Model Predictive Direct Torque Control" (GMPDTC) (see for example EP 2 348 631 A1). As with MPDTC, the computational complexity of GMPDTC increases exponentially with the length of the control horizon making only short horizons tractable.
GMPDTC may be seen as a specialized model predictive control (MPC) algorithm for the torque control of induction machines. The control aim may be to keep machine torque, flux and the neutral point potential of the converter within specified bands while at the same time, the converter switching frequency and power losses are minimized. Instead of
using modulation-based techniques such as PWM, the method directly manipulates the switching transitions of the converter.
Further, background art is known from NEUMERKEL D ET AL: "Real-time application of neural model predictive control for an induction servo drive", CONTROL APPLICATIONS, 1994., PROCEEDINGS OF THE THIRD IEEE CONFERENCE ON GLASGOW, UK 24-26 AUG. 1994, NEW YORK, NY, USA, IEEE, 24 AUGUST 1994, PAGES 433-438 as well as from AKPAN V A ET AL: "Adaptive predictive control using recurrent neural network identification", CONTROL AND AUTOMATION, 2009. MED '09. 17TH MEDITERRANEAN CONFERENCE ON, IEEE, PISCATAWAY, NJ, USA, 24 JUNE 2009, PAGES 61-66.

DESCRIPTION OF THE INVENTION

The object of the invention is to accelerate the execution of GMPDTC algorithms.
This objective is achieved by the subject-matter of the independent method claim 1 and the independent apparatus claim 10. Further exemplary embodiments are evident from the dependent claims and the following description.
A first aspect of the invention relates to a method for controlling an electrical converter according to claim 1. According to an embodiment of the invention, the method comprises the steps of: receiving an actual switching state of the electrical converter; determining a scenario tree for possible future switching states of the electrical converter based on the actual switching state, the scenario tree defining a plurality of possible future switching sequences, a switching sequence being defined by a path from a root node of the scenario tree to a leave node of the scenario tree; calculating a weight and/or cost for a switching sequence by evaluating nodes of the scenario tree; and determining the next switching state to be applied to the electrical converter from a switching sequence with a best weight and/or best cost.
In other words, the method may be a GMPDTC method.
The weight and/or cost may be calculated with respect to a control objective of the electrical converter. For example, the weight and/or cost may be calculated with respect to expected switching losses of the switching sequence.
According to an embodiment of the invention, the evaluation of the nodes is performed by at least two processor cores.
By distributing the evaluation of the nodes of the scenario tree to at least two different processor cores, GMPDTC may be parallelized and thus may be adapted to multi-core processor platforms. Using the additional computational power offered by these platforms may allow solving problems with larger control horizons and therefore may result in improved application performance, for example with further reduced switching losses.
Furthermore, GMPDTC to be executed by a multi-core processor may avoid the need of custom hardware implementations (such as FPGA-based solutions) and therefore may reduce development time and cost.
Further aspects of the invention relate to a computer program according to claim 8 for controlling an converter, which, when being executed by at least two processor cores, is adapted to carry out the steps of the method as described in the above and in the following and a computer-readable medium, in which such a computer program is stored. A computer-readable medium may be a floppy disk, a hard disk, an USB (Universal Serial Bus) storage device, a RAM (Random Access Memory), a ROM (Read Only memory) and an EPROM (Erasable Programmable Read Only Memory).

An aspect of the invention relates to a controller for an electrical converter according to claim 10.

According to an embodiment of the invention, the controller comprises a multi-core processor comprising at least two processor cores. The multi-core processor is adapted for executing the method as described in the above and in the following. For example, the controller comprises further a memory in which the above mentioned computer program is stored.

An aspect of the invention relates to a converter system according to claim 11, for example a medium voltage drive system.

According to an embodiment of the invention, the converter system comprises a converter for generating a variable AC output current and a controller as described in the above and in the following for switching semiconductor switches of the converter.

These and other aspects of the invention will be apparent from and elucidated with reference to the embodiments described hereinafter.

BRIEF DESCRIPTION OF THE DRAWINGS

The subject matter of the invention will be explained in more detail in the following text with reference to exemplary embodiments which are illustrated in the attached drawings.

Fig.1 schematically shows a converter system according to an embodiment of the invention.
Fig.2 shows a flow diagram for method for controlling an converter according to an embodiment of the invention.
Fig. 3 shows a scenario tree according to an embodiment of the invention.

In principle, identical parts are provided with the same reference symbols in the figures.

DETAILED DESCRIPTION OF EXEMPLARY EMBODIMENTS

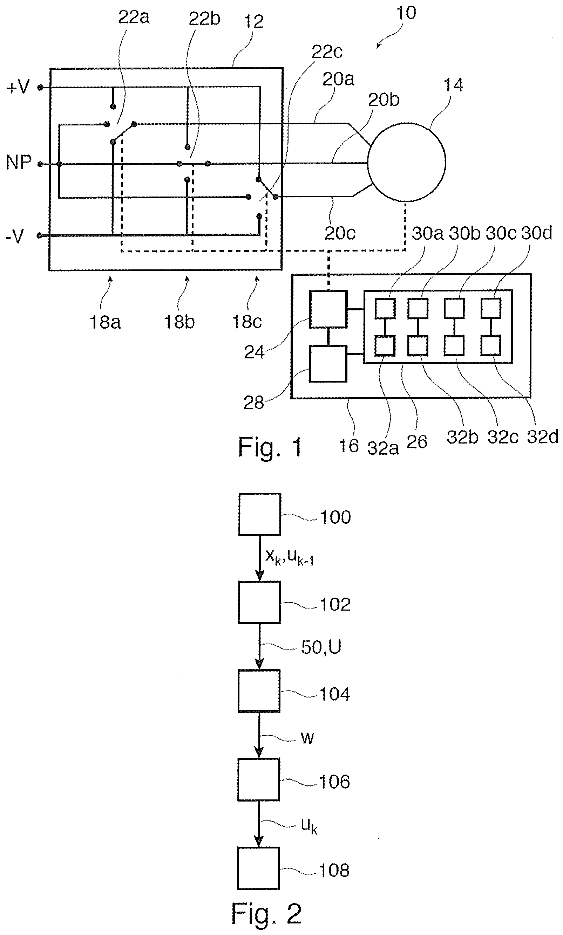

Fig.1 shows a converter system 10 comprising a converter 12, an electrical load 14 and a controller 16.

The converter 12 comprises three half bridges 18a, 18b, 18c adapted for generating a three level output voltage at the respective phase 20a, 20b, 20c of the load 14 by connecting the respective phase 20a, 20b, 20c to a positive potential +V, a negative potential -V or a neutral point potential NP, which, for example, may be provided by a DC link. For connecting the respective phase 20a, 20b, 20c to the potentials +V, -V or NP, each half bridge comprises controllable semiconductor switches 22a, 22b, 22c. The power semiconductor switches 22a, 22b, 22c may comprises thyristors, IGCTs and/or IGBTs.

According to an embodiment of the invention, the converter 12 may comprise at least one half bridge 18a, 18b, 18c for switching an DC input voltage into an AC output voltage.

According to an embodiment of the invention, the converter system 12 may comprise at least one phase, for example three phases 20a, 20b, 20c.

The electrical load 14 may comprise an electrical motor 14, for example a medium voltage drive 14, or an electrical grid 14, which may be supplied by the converter 12.

The controller 16 of the converter 12, which is adapted for determining measurement values of the converter system 10 and for actuating the switches 22a, 22b, 22c, may comprise a communication (and/or measurement) unit 24, a multi-core processor 26 and a commonly shared main memory 28. The communication unit 24 and the multi-core processor 26 may read and write data into the main memory 28.

The communication unit 24 may receive measurement values from the converter 12 and/or the load 14 and may write these values into the main memory 28. Furthermore, the communication unit 24 may read a next switching state from the main memory 28 and may actuate (i.e. control) the switches 22a, 22b, 22c, such that they are switched to this switching state.

The multi-core processor 26 may read the measurement values and an actual switching state from the main memory 28 and may determine the next switching state from these data as will be explained in detail in the following.

The multi-core processor 26 has at least two processor cores 30a, 30b, 30c, 30d, for example 4, 8 or 16 processor cores. The processor cores 30a, 30b, 30c, 30d may be equally designed. Each of the processor cores 30a, 30b, 30c, 30d may be adapted to read and write data into the main memory 28. For example, a communication between the cores may be performed via the main memory 28.

Each processor core 30a, 30b, 30c, 30d may comprise a cache memory 32a, 32b, 32c, 32d, which may be much smaller than the main memory 28, for example 64 kB.

The processor cores 30a, 30b, 30c, 30d and/or their respective cache 32a, 32b, 32c, 32d may be located on one chip. However other configurations are also possible, for example 4 independent processors on one board each having one core.

GMPDTC method

Fig.2 shows a flow diagram for a GMPDTC method.

GMPDTC exploits that output values of the electrical state (for example torque, flux and/or neutral point potential) of the system 12 do not need to be kept as close as possible to their references but just within a specific band that may be limited by specific bounds. In every sampling instant, the control algorithm verifies by means of the mathematical prediction model, whether the previous calculated electrical state can be applied again without driving one (or more) of the output values outside their bands. If this is not the case, the algorithm determines the next control move by solving an MPC problem that uses the discrete-time model of the load 14 to predict the evolution of the electrical state depending on the converter switches 22a, 22b, 22c.

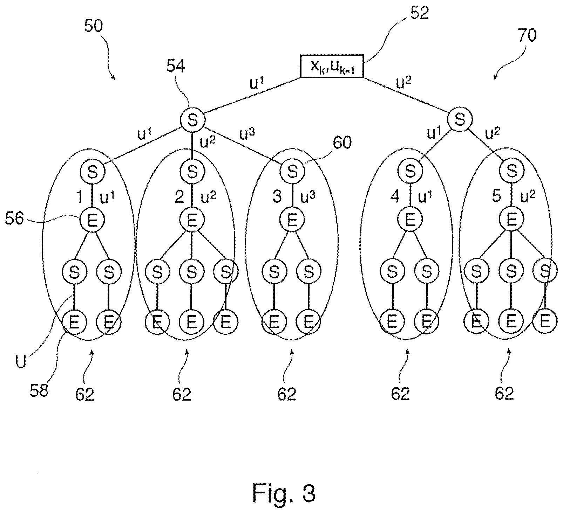

To achieve a long prediction horizon (to be distinguished from the switching horizon), a control strategy is introduced that partitions the prediction horizon into periods in which switching is allowed and periods in which the switches are frozen until one of the predicted outputs will violate its band. The switching sequence of switching steps S and move-blocking steps (also referred to as extension steps) E, which will be explained in more detail with respect to Fig. 3, may be a parameter of the algorithm and may be used instead of a fixed prediction horizon, i.e. the length of the prediction horizon varies due to the variable length of the extension steps.

With respect to Fig. 2, in step 100, the communication unit 24 determines the actual electric state $x_k$ of the converter system 10.

The actual electric state $x_k$ may comprise measured currents and/or voltages in the electrical load 14 and/or in the DC link, the converter 12 is connected to. The actual electric state $x_k$ may further comprise output values like a torque and/or a flux of the load 14 and/or a neutral point potential of the converter 10.

The actual electric state $x_k$ may be written to the main memory 28.

Furthermore, an actual switching state $u_{k-1}$ of the converter 12 may be determined. Usually, the actual switching state of the converter 12 may comprise the actual switching states of the switches 22a, 22b, 22c. The actual switching state $u_{k-1}$ may be the last switching state that has been applied to the converter 12 by the communication unit 24.

In general a switching state $u$ of the converter 12 may comprise switching states of the switches 22a, 22b, 22c of the converter 12 (for example whether a switch is on or off), or more general a state of the half bridge 18a, 18b, 18c (for example, whether the half bridge is connecting the phase to +V, NP or -V, which may be denoted by +1, 0, -1).

According to an embodiment of the invention, an actual switching state $u_{k-1}$ of the electrical converter 12 is received in the processor 16.

In step 102, a scenario tree 50 is generated (see Fig. 3).

The root node 52 may comprise the actual electric state $x_k$ and/or the actual switching state $u_{k-1}$ of the converter 12.

The other nodes of the scenario tree 50 may be generated by applying a control strategy to the root node 52. The control strategy may be denoted by a sequence of characters S and E corresponding to switching and extension actions. Fig. 3 shows exemplarily the switching scenario tree 50 for the control strategy SSESE. The scenario tree 50 is generated by iteratively attaching nodes to all intermediate leave nodes already generated by the characters of the control strategy.

For an switching action S, a switching node (for example 54) for each possible switching state that may follow the switching state of the parent node (for example 52) is attached to every intermediate leave node. The possible switching states may be all different switching states, for example 9 different switching states for a three-phase three-level inverter. In general, A 3-level 3-phase inverter has 27 different switch configurations. Depending on the previous switching state, the number of feasible new switch configurations may be be lower, e.g. 8 or 12.

For an extension action E, an extension node (for example 56) is attached to every intermediate leave node.

In this way, a scenario tree 50 of switching sequences $U$ is generated. Each switching sequence is defined via the nodes of the path from the root node 52 to a leave node 58. A switching sequence may be defined by a vector $U = [u_{k-1}, u_k, \dots, u_{(k+N-1)}]$, wherein $N$ is the switching horizon of the switching sequence $U$ and by the extension times defined between specific switching states.

A scenario tree 50 generated with the control strategy SSESE for a three-phase three-level converter 12 may thus define at least 27 different switching sequences $U$. The number of different switching sequences may be equal to the number of leave nodes and may usually much higher than 27. If one only considers the first element of these sequences, there are 27 possibilities for a 3-level 3-phase converter.

According to an embodiment of the invention, an scenario tree 50 for possible future switching states of the electrical converter 12 may be determined based on the actual switching state $u_{k-1}$.

According to an embodiment of the invention, the scenario tree 50 may define a plurality of possible future switching sequences,

According to an embodiment of the invention, a switching sequence $U$ may be defined by a path from a root node 52 of the scenario tree 50 to a leave node 58 of the scenario tree 50.

In step 104, the switching sequences $U$ are weighted with costs or weights w. During this step, the control algorithm traverses the scenario tree 50 and calculates a weight $w$ for each node of the tree 50. The weight $w$ of a switching sequence $U$ may be the weight of its associated leave node 58.

The weight $w$ of a node may be based on the switching costs that may be calculated for each switching transitions, when switching from the switching state of the parent node to the next switching state of the node. For the calculation of the switching costs, an mathematical model of the system 10 may be used.

According to an embodiment of the invention, a weight $w$ may be calculated for a switching sequence with respect to a control objective, for example to minimize switching losses, by evaluating nodes 60 of the scenario tree 50. Different weights and/or costs may encode different control objectives. While the reduction of switching losses may be the main optimization goal in GMPDTC, a different converter application may have a different control objective, for example keeping electrical states as close as possible to desired reference values (e.g. track a reference torque).

According to an embodiment of the invention, a weight $w$ of a node 60 may be determined by calculating switching losses of a switching transition associated with the node 60, i.e. the switching transition occurring, when switching from the switching state of the parent node to the switching state of the node itself. The weight $w$ may also be calculated based on the state $x_k$ of system, e.g. voltages or currents.

According to an embodiment of the invention, a weight of a switching sequence $U$ may be calculated based on the weight of the node 60 and a weight of a parent node 54 of the node.

Furthermore, during step 104, for each switching sequence $U$ the electrical state $x_k$ of the system 10 is extrapolated in the future. While traversing the scenario tree 40, the control algorithm may calculate the electrical state of a node from the electrical state of its parent node.

For an S-node, the switching costs are calculated and the electrical state is extrapolated one sampling instance in the future.

For an E-node, the electrical state is extrapolated in the future until bounds on the extrapolated state are violated.

According to an embodiment of the invention, the scenario tree 50 comprises switching nodes S and/or extension nodes E.

According to an embodiment of the invention, evaluating a switching node S comprises calculating a weight for a switching node based on switching losses of a switching transition defined by the switching node.

According to an embodiment of the invention, evaluating an extension node E comprises calculating an extension time for an extension nodes by extrapolating an electrical state of the converter 12 until the electrical state leaves a predefined interval.

A switching sequence $U$ together with its extrapolated electrical state $x_k$ may be seen as a future scenario of the converter system 10. In such a way, every leave node 58 is associated with a scenario. Each scenario has a weight w making a prediction about the losses of the converter 12, when performing the scenario.

In the end, every leave node 58 of the tree 50 may be associated with a specific weight (or cost) $w$ depending on the number of switch transitions and band violations occurred during the switching sequence $U$.

In step 106, from the switching sequence $U$ with the lowest (or best) weight $w$, the switching state $u_k$ following the switching state $u_{k-1}$ of the root node is chosen as the next switching state $u_k$ of the converter 12 and written into the memory 28.. The algorithm may choose the control law that is associated with the leave node 58 that has minimum costs and applies only the first control move $u_k$ to the inverter in accordance with the moving horizon policy.

According to an embodiment of the invention, the next switching state $u_k$ to be applied to the electrical converter 12 may be determined from a switching sequence with a best weight.

In step 108, the communication unit 24 reads the next switching state $u_k$ from the memory 28 and controls the switches 22a, 22b, 22c of the converter 12, such that the converter 12 is switched to this switching state.

The steps 100 to 108 may be performed in each switching cycle of the converter 12.

It has to be noted that GMPDTC may be performed in different ways. For example, steps 104 and 106 may be be part of step 102.

In general, GMPDTC applies a special move-blocking strategy to achieve long prediction horizons at a reduced number of switching scenarios. This may be advantageous for applications in which calculation time is very limited (such as in DTC) because in a standard MPC problem formulation the number of switching sequences $U$ to be considered would grow exponentially with the prediction horizon and would therefore limit the method to very short horizons.

In the following, embodiments are given, how the GMPDTC algorithm may be executed on multiply processor cores 30a, 30b, 30c, 30d.

According to an embodiment of the invention, the evaluation of the nodes 60 is performed by at least two processor cores 30a, 30b, 30c, 30d.

GMPDTC may be seen as a tree traversal problem in which each node 60 (note that the reference numeral 60 is used for a general tree node) of the scenario tree 50 must be visited exactly once. Already sequential implementations may have execution times that depend significantly on data layout and code organization. For a parallel implementation these effects may be expected to be amplified. For example, the order in which the nodes 60 are visited (e.g. depth-first or bread-first) may play an important role. An efficient parallelization strategy may depend strongly on the time needed to compute a single node 60, the time spent for communication of the relevant node data between the processor cores 30a, 30b, 30c, 30d and/or the number of processor cores 30a, 30b, 30c, 30d. An efficient parallelization of GMPDTC may have to consider not only the time spent on node evaluation and inter-core communication but may also have to employ efficient data structures and take architecture dependent characteristics such as memory cache size 32a, 32b, 32c, 32d into account.

For example, if communication is expensive in contrast to evaluating the nodes 60, a solution may be to split the tree 50 into several sub-trees 62, which are then computed in parallel on different processor cores 30a, 30b, 30c, 30d.

During the exploration of the scenario tree 50, GMPDTC may prune tree branches corresponding to switching sequences $U$ that would result in outputs with increasing band violation. In the case that no feasible switching scenario is left after the pruning, the algorithm may employ an infeasible-exit strategy for selecting the next switching command to guarantee fail-safe operation.

Centralized node pool management

An alternative example of parallel execution not falling in the scope of the claims may be centralized node pool management during the steps 102 to 106.

If the inter-core communication between the cores 30a, 30b, 30c, 30d is relatively cheap in comparison to the time needed to compute a node 60, a centralized pool of pending tree nodes 60 may be used, which are then distributed by a master process to the various cores.

In particular, in step 102, a master process, that, for example, is executed by the processor core 30a, generates the tree 50 and in particular the tree nodes 60 of the tree 50. The tree nodes 60 may be stored in a centralized node pool in the main memory 28.

According to an embodiment of the invention, a central node pool of nodes 60 of the scenario tree 50 that have to be evaluated may be generated, for example in the main memory.

In step 104, the master process distributes pending tree nodes 60 to slave processes, that, for example may be executed in the other processor cores 30b, 30c, 30d.

According to an embodiment of the invention, the nodes 60 of the central node pool are distributed to the processor cores 30a, 30b, 30c, 30d.

The slave processes then perform the necessary operations on the received pending tree nodes 60 and return the results back to the master process which may maintain global knowledge.

According to an embodiment of the invention, the nodes 60 distributed to a processor core are evaluated at the processor core.

A breadth-first approach for selecting the next pending nodes from the pool may be used. This may be advantageous since it quickly produces a huge number of nodes preventing starvation of processor cores. However, the storage needed for the centralized node pool may be significantly higher than with a depth-first strategy.

In step 106, the master process selects the switching sequence with the lowest weight.

Distributed node pool management

A further, alternative example of parallel execution not falling in the scope of the claims may be distributed node pool management during the steps 102 to 106.

If inter-core communication between the cores 30a, 30b, 30c, 30d is expensive in contrast to node evaluation, a distributed node pool management may be used.

In particular, in step 102, a master process, that, for example, is executed by the processor core 30a, generates only the first level(s) of the scenario tree 50. Each branch of this incomplete scenario tree is distributed to a parallel process, that, for example, may be executed in the processor cores 30a, 30b, 30c, 20d.

In step 104, every slave process is working on a subset of pending tree nodes 60 it stores in its own local node pool, for example in its local memory cache 32a, 32b, 32c, 32d.

According to an embodiment of the invention, at least two local node pools of nodes 60 of the scenario tree 50 are generated with at least two processor cores 30a, 30b, 30c, 30d.

According to an embodiment of the invention, nodes 60 of a local node pool are evaluated with a processor core that has generated the respective local node pool.

To avoid uneven workloads a load balancing strategy may be used, which takes over the redistribution of pending nodes 60 and updating the global variables (e.g. value of the incumbent node). The load balancing may be performed by the master process.

In step 106, the master process selects the switching sequence with the lowest weight.

Although the distributed node pool strategy may need less communication than the centralized approach, even modest inter-core communication can deteriorate overall performance significantly for applications that require cycle times in the microsecond range.

Splitting into sub-trees

A example according to the invention of parallel execution may be splitting into sub-trees or sub-paths during the steps 102 to 106. Splitting the global scenario tree 50 into sub-trees 62 which are then assigned to the cores for parallel computation may be considered as a special variant of the distributed node pool management described above.

In step 102, the scenario tree 50 is generated and split into sub-trees 62.

For example, a master process that, for example, is executed by the processor core 30a, generates the tree 50 in main memory 28 and splits it into sub-trees 62 according to a general rule. However, it is not necessary that the master process generates the full tree in the main memory 28 as the slave processes may generate their individual sub-trees on the fly (in their local cache memory 32a, 32b, 32c, 32d).

For example, the global scenario tree 50 is split at the nodes 54 of the first level. I.e. the sub-trees 62 have root nodes 54 that are the first level nodes of the global scenario tree 50. The sub-trees 62 are then distributed to the processor cores 30a, 30b, 30c, 30d. For example, each sub-trees 62 is stored in the respective local cache memory 32a, 32b, 32c, 32d.

However, it is possible that parallel processes that may be executed in the processor cores 30a, 30b, 30c, 30d generate the tree 50 in its local cache memory 32a, 32b, 32c, 32d, for example after reading the inputs $x_k$ and $u_{k-1}$. It is further possible that the parallel processes may only generate the small sub-trees they are interested in, i.e. only a part of the full tree 50.

After that, the parallel process may split the scenario tree 50 themselves. In this case, no master process may be needed.

Depending on the number of processor cores offered by the controller 16, the scenario tree 50 may be split at different levels to obtain sufficiently many sub trees 62 to keep all processor cores 30a, 30b, 30c, 30d busy.

The approach of splitting into (real) sub-trees 62 may be used if only few processor cores are available and inter-core communication should be kept at a minimum level.

According to an embodiment of the invention, the scenario tree 50 is split into sub-trees 62 and the sub-trees 62 are distributed to at least two processor cores 30a, 30b, 30c, 30d.

According to an embodiment of the invention, a weight for a switching sequence of a first sub-tree 62 is calculated with a first processor core 30a and a weight for a switching sequence of a second sub-tree 62 is calculated with a second processor core 30b.

In the case that the controller 16 offers as many processor cores as there are leave nodes 58 in the scenario tree 50, every processor core 30a, 30b, 30c, 30d may need to compute only one scenario. The individual paths (switching sequences) are computed by the processor cores 30a, 30b, 30c, 30d accepting the redundancy of computations performed at the upper tree levels. An efficient implementation of this strategy may require a quick aggregation of scenario results. For example, specific processor cores may execute master processes that determine the scenario with the lowest weight for a group of processor cores. The approach may be particularly suited for execution on GPU architectures which are specialized on executing the same instruction on multiple data.

According to an embodiment of the invention, the scenario tree 50 is split into single switching sequences $U$ and the switching sequences $U$ are distributed to a plurality of processor cores 30a, 30b, 30c, 30d.

According to an embodiment of the invention, a weight for a switching sequence $U$ is calculated with a processor core, the switching sequence $U$ has been distributed to.

The number of sub-trees 62 into which the global scenario tree 50 is split may be a design parameter and may be chosen depending on the number of available processor cores 30a, 30b, 30c, 30d. A solution may be to partition the global scenario tree 50 at the first level into sub-trees 62 whose root nodes 54 are the first level nodes 54 of the global tree 50.

Due to the switching constraints imposed by the hardware (in particular the switches 22a, 22b, 22c) of the converter 12, the sub-trees 62 may have different size. Therefore, the time it takes to explore a specific sub-tree 62 may be different as well.

For each actual switching state $u_{k-1}$, a lookup table 70 may be stored in the controller 16 that has been pre-calculated for a specific control strategy (for example SSESE).

Each lookup table 70 may comprise the scenario tree 50 for a specific switching state $u_{k-1}$. The lookup tables

70 may be stored in the global memory 28 or in each cache memory 32a, 32b, 32c, 32d.

Furthermore, the lookup table 70 may comprise information into which sub-trees 62 the global scenario tree 50 should be split and/or an estimated processing time of the respective sub-tree 62 (see Fig. 3).

For example, in the case of the scenario tree 50 of Fig. 3, the lookup table 70 may comprise the sub-trees 62 and the following (fictitious) table comprising the estimated times required to process a sub-tree 62:

| Sub tree: | Time: |
|-----------|-------|
| 1,3,4 | 3 |
| 2,5 | 5 |

From these execution times, a scheduling strategy may be derived, which processor cores 30a, 30b, 30c, 30d should process which sub-tree 62 in which order.

Also the scheduling strategy may be stored in the look-up table 70. The scheduling strategy for a particular switching cycle may then be selected depending on the previously applied switching state $u_{k-1}$. The lookup table 70 may store which processor core 30a, 30b, 30c, 30d may process which sub-tree 62 and/or may store the order of the processing of the sub-trees 62 by one processor core 30a, 30b, 30c, 30d.

A resulting distribution of the sub-trees using an LPT rule for a controller 16 with two processor cores 30a, 30b is shown below:

| CPU core: | Sub tree: |
|-----------|-----------|
| 1 | 2, 1, 4 |
| 2 | 5, 3 |

Note that since in this example the splitting is performed at the second level of the scenario tree 50, the resulting schedule may involve redundant computations for the nodes 52, 54 at the first level.

Summarized, the scheduling strategy may be pre-calculated and stored in the controller 16. However, if the control algorithm is able to provide additional information about the scenario tree 50 structure at runtime, an online scheduling based on a heuristic such as LPT (see below) may be used for scheduling. To meet the real time requirements, the heuristic should have a low computational demand. If a computational inexpensive scheduling heuristic is used, the schedules may be computed and updated in every switching cycle to take additional information from the control algorithm into account which may be only available online.

According to an embodiment of the invention, the scenario tree 50 is determined by loading at least parts of the scenario tree 50 from a pre-calculated table 70.

According to an embodiment of the invention, a splitting into sub-trees 62 of the scenario tree 50 is predefined in the table 70.

According to an embodiment of the invention, a calculation/processing time of a sub-tree 62 of the scenario tree 50 is predefined in the table 70. The calculation and/or processing time of a sub-tree is not strictly needed to be stored in the table. It may be only required to pre-calculate the distribution of the sub-trees to the processor cores.

According to an embodiment of the invention, a distribution of sub-trees 62 to processor cores 30a, 30b, 30c, 30d is predefined in the table 70.

In step 104, the processor cores 32a, 32b, 32c, 32d calculate the scenarios associated with the sub-trees 62. The resulting weight *w* for each switching sequence/scenario may be stored in the local cache memory 32a, 32b, 32c, 32d.

In step 106, the scenario with the lowest weight is determined.

For example, all parallel processes write at least the next possible switching states $u_k$ and their weights w to the main memory 28. After that, a master process determines the switching state with the lowest weight w.

It is also possible that each processor core 30a, 30b, 30c, 30d selects its local lowest weight *w* and writes this local best weight *w* and at least the corresponding next possible switching state $u_k$ to the main memory 28. After that, a master process determines the global lowest weight from the local lowest weights.

It has to be noted that for accelerating the processing, the code of the master process and of the parallel/slave processes may be stored in the respective cache memory 32a, 32b, 32c, 32d of the processor core 30a, 30b, 30c, 30d that executes the respective process.

Scheduling strategy

In the following possible scheduling strategies that may be used online or for calculating the lookup table 70 are explained.

The problem of optimally distributing the individual sub-tree exploration problems to the available processor cores 30a, 30b, 30c, 30d may be posed as a makespan minimization problem, a problem in scheduling theory: given m machines (the cores 30a, 30b, 30c, 30d) and n jobs (the sub-trees 62) with known processing times $p_1,..., p_n$, the makespan minimization problem is to find a scheduling strategy that finishes the batch of jobs in minimum time.

Under the assumption that processing of a job must not be interrupted and each job may be processed on any machine, the minimum makespan is known to be NP-hard already for m=2 machines. An optimal schedule is given by the solution of the following integer linear problem (ILP):

$$C_{max}(OPT) := \min \; C_{max}$$
$$\text{subject to} \; \sum_{j=1}^{n} x_{ij} p_j \leq C_{max}, \quad i = 1, \ldots, m$$
$$\sum_{i=1}^{m} x_{ij} = 1, \quad j = 1, \ldots, n$$
$$x_{ij} = \{0, 1\}, \quad i = 1, \ldots, m, \; j = 1, \ldots, n.$$

A heuristic achieving fairly good approximate solutions for the makespan minimization problem is the Longest Processing Time first (LPT) rule. At the begin of the schedule the LPT-rule assigns the longest m jobs to the m machines. After a machine has finished a job, the job with the longest processing time from the remaining jobs will be assigned to it.

The optimal schedule (or at least a good schedule) may be calculated by solving the above mentioned IPL (or LPT):

The structure of each scenario tree 50 imposed by the converter switching restrictions is known.

An upper bound of the computations involved with each node 60 may be estimated a-priori, since the mathematical model of the system 10 that is used during step 104 and/or the corresponding algorithm for evaluating step 104 is known. Thus, an upper bound for the calculation (or number of instructions to be executed) may be known. In a simple case, a fixed value may be used for S-nodes and E-nodes.

The processing times of the sub-trees 62 may then be estimated for a worst-case scenario. This may allow to apply existing results from scheduling theory to efficiently parallelize MPDTC: the processing of the sub-trees 62 may be distributed either optimally by solving the associated ILP, by using the LPT-rule or similar rules as a scheduling heuristic. Simulation results have shown that for GMPDTC of reasonable control horizons, the LPT rule may deliver near to optimal schedules.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the invention as defined by the appended claims. In the claims, the word "comprising" does not exclude other elements or steps. A single processor or controller or other unit may fulfil the functions of several items recited in the claims. Any reference signs in the claims should not be construed as limiting the scope.

**Claims**

1. A method for controlling an electrical converter (12), the method comprising the steps of:

   receiving an actual switching state ($u_{k-1}$) of the electrical converter (12);
   determining a scenario tree (50) for possible future switching states of the electrical converter (12) based on the actual switching state ($u_{k-1}$), the scenario tree (50) defining a plurality of possible future switching sequences, a switching sequence ($U$) being defined by a path from a root node (52) of the scenario tree (50) to a leave node (58) of the scenario tree (50);
   determining the scenario tree (50) by loading at least parts of the scenario tree (50) from a pre-calculated table (70),
   calculating a weight ($w$) for a switching sequence with respect to a control objective of the electrical converter (12) by evaluating nodes (60) of the scenario tree (50);
determining the next switching state $(u_k)$ to be applied to the electrical converter (12) from a switching sequence with a best weight;

**characterized by**

splitting the scenario tree (50) into sub-trees (62);
distributing the sub-trees (62) to the at least two processor cores (30a, 30b, 30c, 30d)
performing the evaluation of the nodes (60) by at least two processor cores (30a, 30b, 30c, 30d), and
wherein a calculation time of a sub-tree (62) of the scenario tree (50) is predefined in said pre-calculated table (70) and
wherein a splitting into sub-trees (62) of the scenario tree (50) is predefined in said pre-calculated table (70).

2. The method of claim 1, further comprising the steps of:

calculating a weight for a switching sequence of a first sub-tree with a first processor core;
calculating a weight for a switching sequence of a second sub-tree with a second processor core.

3. The method of one of the preceding claims, further comprising the steps of:

splitting the scenario tree (50) into switching sequences ($U$);
distributing the switching sequences ($U$) to a plurality of processor cores (30a, 30b, 30c, 30d);
calculating a weight for a switching sequence with a processor core to which the switching sequence has been distributed to.

4. The method of one of the preceding claims, further comprising the steps of:

determining a weight (w) of a node (60) by calculating switching losses of a switching transition associated with the node (60);
calculating a weight of a switching sequence ($U$) based on the weight of the node (60) and a weight of a parent node (54) of the node.

5. The method of claim 1,
wherein a distribution of sub-trees (62) to processor cores (30a, 30b, 30c, 30d) is predefined in said pre-calculated table (70).

6. The method of one of the preceding claims,
wherein the scenario tree (50) comprises switching nodes (S);
wherein evaluating a switching node (S) comprises calculating a weight for a switching node based on switching losses of a switching transition defined by the switching node.

7. The method of one of the preceding claims,
wherein the scenario tree (50) comprises extension nodes (E);
wherein evaluating an extension node (E) comprises calculating an extension time for an extension nodes by extrapolating an electrical state of the converter until the electrical state leaves a predefined interval.

8. A computer program for controlling a converter (12), which, when being executed by at least two processor cores (30a, 30b, 30c, 30d) of a controller according to claim 10 is adapted to carry out the steps of the method of one of claims 1 to 7.

9. A computer-readable medium, in which a computer program according to claim 8 is stored.

10. Controller (16) for an electrical converter (12), comprising
a multi-core processor (26) comprising at least two processor cores (30a, 30b, 30c, 30d);
wherein the multi-core processor (26) is adapted for executing the method of one of claims 1 to 7.

11. A converter system (10), comprising:

a converter (12) for generating a variable AC output current;
a controller (16) according to claim 10 for switching semiconductor switches (22a, 22b, 22c) of the converter (12).

**Patentansprüche**

1. Ein Verfahren zum Steuern eines elektrischen Umrichters (12), wobei das Verfahren die Schritte umfasst:

   Empfangen eines Ist-Schaltzustands ($u_{k-1}$) des elektrischen Umrichters (12);
   Bestimmen eines Szenariobaums (50) für mögliche zukünftige Schaltzustände des elektrischen Umrichters (12) basierend auf dem Ist-Schaltzustand ($u_{k-1}$), wobei der Szenariobaum (50) eine Vielzahl von möglichen zukünftigen Schaltfolgen definiert, wobei eine Schaltfolge ($U$) durch einen Pfad aus einem Wurzelknoten (52) des Szenariobaums (50) zu einem Blattknoten (58) des Szenariobaums (50) definiert ist;
   Bestimmen des Szenariobaums (50) durch Laden von wenigstens Teilen des Szenariobaums (50) aus einer vorausberechneten Tabelle (70),
   Berechnen eines Gewichts ($w$) für eine Schaltfolge in Bezug auf eine Steuerzielsetzung des elektrischen Umrichters (12) durch Bewerten von Knoten (60) des Szenariobaums (50);
   Bestimmen des an den elektrischen Umrichter (12) anzulegenden nächsten Schaltzustands ($u_k$) aus einer Schaltfolge mit einem besten Gewicht;
   **gekennzeichnet durch**
   Aufspalten des Szenariobaums (50) in Teilbäume (62);
   Verteilen der Teilbäume (62) auf die wenigstens zwei Prozessorkerne (30a, 30b, 30c, 30d),
   Durchführen des Bewertens der Knoten (60) durch wenigstens zwei Prozessorkerne (30a, 30b, 30c, 30d), und wobei eine Berechnungszeit eines Teilbaums (62) des Szenariobaums (50) in der vorausberechneten Tabelle (70) vordefiniert ist und
   wobei ein Aufspalten des Szenariobaums (50) in Teilbäume (62) in der vorausberechneten Tabelle (70) vordefiniert ist.

2. Das Verfahren nach Anspruch 1, das ferner die Schritte umfasst:

   Berechnen eines Gewichts für eine Schaltfolge eines ersten Teilbaums mit einem ersten Prozessorkern;
   Berechnen eines Gewichts für eine Schaltfolge eines zweiten Teilbaums mit einem zweiten Prozessorkern.

3. Das Verfahren nach einem der vorhergehenden Ansprüche, das ferner die Schritte umfasst:

   Aufspalten des Szenariobaums (50) in Schaltfolgen ($U$);
   Verteilen der Schaltfolgen ($U$) auf eine Vielzahl von Prozessorkernen (30a, 30b, 30c, 30d);
   Berechnen eines Gewichts für eine Schaltfolge mit einem Prozessorkern, auf welchen die Schaltfolge verteilt worden ist.

4. Das Verfahren nach einem der vorhergehenden Ansprüche, das ferner die Schritte umfasst:

   Bestimmen eines Gewichts ($w$) eines Knotens (60) durch Berechnen von Schaltverlusten eines dem Knoten (60) zugeordneten Schaltübergangs;
   Berechnen eines Gewichts einer Schaltfolge (U) basierend auf dem Gewicht des Knotens (60) und einem Gewicht eines Elterknotens (54) des Knotens.

5. Das Verfahren nach Anspruch 1,
   wobei ein Verteilen von Teilbäumen (62) auf Prozessorkerne (30a, 30b, 30c, 30d) in der vorausberechneten Tabelle (70) vordefiniert ist.

6. Das Verfahren nach einem der vorhergehenden Ansprüche,
   wobei der Szenariobaum (50) Schaltknoten (S) umfasst; wobei das Bewerten eines Schaltknotens (S) ein Berechnen eines Gewichts für einen Schaltknoten basierend auf Schaltverlusten eines durch den Schaltknoten definierten Schaltübergangs umfasst.

7. Das Verfahren nach einem der vorhergehenden Ansprüche,
   wobei der Szenariobaum (50) Erweiterungsknoten (E) umfasst;

wobei das Bewerten eines Erweiterungsknotens (E) ein Berechnen einer Erweiterungszeit für einen Erweiterungsknoten durch Extrapolieren eines elektrischen Zustands des Umrichters, bis der elektrische Zustand ein vordefiniertes Intervall verlässt, umfasst.

8. Ein Rechnerprogramm zum Steuern eines Umrichters (12), das, bei dessen Ausführung durch wenigstens zwei Prozessorkerne (30a, 30b, 30c, 30d) einer Steuerung gemäß Anspruch 10, dazu ausgelegt ist, die Schritte des Verfahrens nach einem der Ansprüche 1 bis 7 durchzuführen.

9. Ein Rechnerlesbares Medium, auf welchem ein Rechnerprogramm gemäß Anspruch 8 gespeichert ist.

10. Steuerung (16) für einen elektrischen Umrichter (12), umfassend
einen Mehrkernprozessor (26) mit wenigstens zwei Prozessorkernen (30a, 30b, 30c, 30d);
wobei der Mehrkernprozessor (26) dazu ausgelegt ist, das Verfahren nach einem der Ansprüche 1 bis 7 auszuführen.

11. Ein Umrichtersystem (10), das umfasst:

einen Umrichter (12) zum Erzeugen eines variablen Wechselstrom-Ausgangsstroms;
eine Steuerung (16) gemäß Anspruch 10 zum Schalten von Halbleiterschaltern (22a, 22b, 22c) des Umrichters (12) .

**Revendications**

1. Un procédé pour commander un convertisseur électrique (12), le procédé comprenant les étapes consistant :

à recevoir un état de commutation actuel ($u_{k-1}$) du convertisseur électrique (12) ;
à déterminer un arbre de scénarios (50) des possibles futurs états de commutation du convertisseur électrique (12) en se basant sur l'état de commutation actuel ($u_{k-1}$), l'arbre de scénarios (50) définissant une pluralité de possibles futures séquences de commutation, une séquence de commutation ($U$) étant définie par un chemin depuis un noeud racine (52) de l'arbre de scénarios (50) jusqu'à un noeud feuille (58) de l'arbre de scénarios (50) ;
à déterminer l'arbre de scénarios (50) en chargeant au moins des parties de l'arbre de scénarios (50) à partir d'une table précalculée (70),
à calculer un poids ($w$) pour une séquence de commutation par rapport à un objectif de contrôle du convertisseur électrique (12) en évaluant des noeuds (60) de l'arbre de scénarios (50) ;
à déterminer le prochain état de commutation ($u_k$) qui doit être appliqué au convertisseur électrique (12) à partir d'une séquence de commutation ayant le meilleur poids ; **caractérisé en ce qu'**il consiste
à diviser l'arbre de scénarios (50) en sous-arbres (62) ;
à distribuer les sous-arbres (62) aux deux, ou plus, coeurs de processeur (30a, 30b, 30c, 30d) ;
à réaliser l'évaluation des noeuds (60) par au moins deux coeurs de processeur (30a, 30b, 30c, 30d), et
dans lequel un temps de calcul d'un sous-arbre (62) de l'arbre de scénarios (50) est prédéfini dans une table (70) et
dans lequel une division en sous-arbres (62) de l'arbre de scénarios (50) est prédéfinie dans ladite table précalculée (70).

2. Le procédé selon la revendication 1, comprenant en outre les étapes consistant :

à calculer un poids pour une séquence de commutation d'un premier sous-arbre avec un premier coeur de processeur ;
à calculer un poids pour une séquence de commutation d'un second sous-arbre avec un second coeur de processeur.

3. Le procédé selon l'une quelconque des revendications précédentes, comprenant en outre les étapes consistant :

à diviser l'arbre de scénarios (50) en séquences de commutation ($U$) ;
à distribuer les séquences de commutation ($U$) à une pluralité de coeurs de processeur (30a, 30b, 30c, 30d) ;
à calculer un poids pour une séquence de commutation avec un coeur de processeur auquel la séquence de commutation a été distribuée.

**4.** Le procédé selon l'une quelconque des revendications précédentes, comprenant en outre les étapes consistant :

à déterminer un poids (*w*) d'un noeud (60) en calculant des pertes de commutation d'une transition de commutation associée au noeud (60) ;
à calculer un poids pour une séquence de commutation (*U*) en se basant sur le poids du noeud (60) et sur un poids d'un noeud parent (54) du noeud.

**5.** Le procédé selon la revendication 1,
dans lequel une distribution de sous-arbres (62) à des coeurs de processeur (30a, 30b, 30c, 30d) est prédéfinie dans ladite table précalculée (70).

**6.** Le procédé selon l'une quelconque des revendications précédentes,
dans lequel l'arbre de scénarios (50) comprend des noeuds de commutation (S) ;
dans lequel l'évaluation d'un noeud de commutation (S) consiste à calculer un poids pour un noeud de commutation en se basant sur des pertes de commutation d'une transition de commutation définie par le noeud de commutation.

**7.** Le procédé selon l'une quelconque des revendications précédentes,
dans lequel l'arbre de scénarios (50) comprend des noeuds d'extension (E) ;
dans lequel l'évaluation d'un noeud d'extension (E) consiste à calculer un temps d'extension pour un noeud d'extension en extrapolant un état électrique du convertisseur jusqu'à ce que l'état électrique quitte un intervalle prédéfini.

**8.** Un programme d'ordinateur pour commander un convertisseur (12) qui, lorsqu'il est exécuté par au moins deux coeurs de processeur (30a, 30b, 30c, 30d) d'un dispositif de commande selon la revendication 10, est conçu pour réaliser les étapes du procédé selon l'une des revendications 1 à 7.

**9.** Un support lisible par ordinateur, dans lequel un programme d'ordinateur selon la revendication 8 est stocké.

**10.** Un dispositif de commande (16) pour un convertisseur électrique (12), comprenant :

un processeur multicoeur (26) comprenant au moins deux coeurs de processeur (30a, 30b, 30c, 30d) ;
dans lequel Le processeur multicoeur (26) est conçu pour exécuter le procédé selon l'une des revendications 1 à 7.

**11.** Un système de convertisseur (10) comprenant :

un convertisseur (12) pour générer un courant de sortie en courant alternatif variable ;
un dispositif de commande (16) selon la revendication 10 pour commuter des commutateurs semi-conducteurs (22a, 22b, 22c) du convertisseur (12).

Fig. 1

Fig. 2

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2348631 A1

**Non-patent literature cited in the description**

- Real-time application of neural model predictive control for an induction servo drive. **NEUMERKEL D et al.** CONTROL APPLICATIONS, 1994., PROCEEDINGS OF THE THIRD IEEE CONFERENCE ON. IEEE, 24 August 1994, 433-438

- Adaptive predictive control using recurrent neural network identification. **AKPAN V A et al.** CONTROL AND AUTOMATION, 2009. MED '09. 17TH MEDITERRANEAN CONFERENCE ON. IEEE, 24 June 2009, 61-66